# EUROPEAN PATENT SPECIFICATION

(11) **EP 3 620 320 B1**
(45) Date of publication and mention of the grant of the patent: **30.06.2021**
(21) Application number: 18465570.2
(22) Date of filing: 05.09.2018
(51) Int. Cl.: B60L 1/00, H04M 1/725, H04W 84/20

(54) **METHOD AND SYSTEM FOR MANAGING A RADIO LINK BETWEEN A MASTER DEVICE AND AN ACCESSORY DEVICE AND CORRESPONDING MASTER AND ACCESSORY DEVICE FOR THE SYSTEM**
VERFAHREN UND SYSTEM ZUR VERWALTUNG EINER FUNKVERBINDUNG ZWISCHEN EINER MASTER-VORRICHTUNG UND EINER HILFSVORRICHTUNG UND ZUGEHÖRIGE MASTER- UND HILFSVORRICHTUNG FÜR DAS SYSTEM
PROCÉDÉ ET SYSTÈME DE GESTION D'UNE LIAISON RADIO ENTRE UN DISPOSITIF MAÎTRE ET UN DISPOSITIF ACCESSOIRE ET DISPOSITIF MAÎTRE ET ACCESSOIRE CORRESPONDANT POUR LE SYSTÈME

(43) Date of publication of application: 11.03.2020
(73) Proprietor: Continental Automotive GmbH, 30165 Hannover (DE)
(72) Inventor: Badea, Alina-Georgeta, 307220 Giroc (RO)
(74) Representative: Continental Corporation

(56) References cited:
- CN-A- 103 921 629
- US-A1- 2012 083 209
- US-A1- 2017 282 718
- US-A1- 2017 289 668
- US-A1- 2018 007 504

## Description

The invention is concerned with a method for operating an accessory device that is designed to be electrically and/or mechanically connected to a master device over a predefined physical link. Such a master device may be, for example, a mobile phone or a motor vehicle. The accessory device may be an auxiliary device for the master device or, in the case of a motor vehicle, for example a trailer. The invention is also concerned with a system comprising a master device and an accessory device wherein the system may perform the inventive method. The invention also comprises the components of the system, i.e. an accessory device and a master device.

A system, like, for example, a combination of a motor vehicle and a trailer, may require that a master device of the system (e.g. the motor vehicle) and an accessory device of the system (e.g. the trailer) shall be connected by a physical link and shall also provide a possibility for data exchange between the master and the accessory device. The physical link may be designed as a mechanical link for mechanically coupling the accessory device to the master device. Additionally or alternatively, the physical link may also comprise an electrical link for transferring or providing electrical energy from the master device to the accessory device for supplying the accessory device with the electric energy.

In order to reduce the amount of additional wiring between the master and the accessory device, the transfer of digital data may be implemented by means of a radio interface that allows to connect the master device and the accessory device by means of a radio link, e.g. a Bluetooth link. In other words, the data transfer may be realized as a wireless link using the radio interface and a radio link. The radio link may therefore be independent of the physical link. For initiating a radio link, it is known to provide a so called pairing routine that is performed by the master device and the accessory device. By means of the pairing routine, the master device and the accessory device may exchange pairing data, e.g. registration data and/or an encryption key. The pairing routine must be initiated by a user in order to prevent unwanted linkage of devices. However, later, after the master device and the accessory device have been switched off and switched on again, the radio link can be reestablished on the basis of the stored pairing data without any further need of performing the pairing routine again, and therefore without the need of user input by a user, as the master device and/or the accessory device have stored the pairing data (e.g. registration data and/or the encryption key). The two devices may verify or authenticate the reestablishment of a radio link automatically.

This automatic establishment of the radio link is performed as follows. Once the accessory device is switched on, a control unit of the accessory device may send out a device identifier, e.g. a device name, over the radio interface. The master device may receive the device identifier. A control unit of the master device may detect that the received device identifier is associated with stored pairing data (e.g. registration data and/or an encryption key) as obtained from a previously performed pairing routine. The control unit of the master device may then use these stored pairing data to establish the radio link or communication link to the accessory device without any further need of user input. The accessory device will accept the radio link or communication link, as the correct pairing data are used by the master device and/or as the master device is registered with the accessory device which the accessory device may recognize by its own stored pairing data.

However, if the physical link between the accessory device and the master device is disconnected by a user and the user connects the accessory device to another, new master device, then, after switching on the accessory device again, the accessory device might again send out its device identifier over the radio interface. As described above, the device identifier may be received not only by the new master device, but also by the former master device to which the accessory device was formerly connected to.

This may lead to the problem that the former master device may establish the radio link to the accessory device although the corresponding physical link is disconnected or non-existent anymore. The user expects the accessory device to establish the radio link with the new master device, instead.

If the user tries to trigger or perform the pairing routine for pairing the new master device with the accessory device that is now connected by a new physical link to that new master device, the pairing routine will fail, as the accessory device will already have established the radio link to the former master device.

US 2018/007504 A1 discloses telematics devices and corresponding methods. In one embodiment, a telematics device includes at least one hub device having a wireless network interface, and one or more peripheral devices. Each peripheral device includes a device in wireless communication with the hub device and/or at least one other peripheral device. Other embodiments include a camera interface for a telematics device, a smart lock assembly for a trailer, and a trailer tracking system.

Systems to wirelessly power transfer to a tailgate are disclosed in US 2017/282718 A1. A disclosed vehicle includes a transmitting circuit in a body of the vehicle configured to transmit power via wireless capacitive transfer. The vehicle also includes a receiving circuit in a tailgate of the vehicle configured to receive power via wireless capacitive transfer.

US 2012/083209 A1 discloses a wireless communications system including an accessory device and multiple host devices. A host device pairs wirelessly with an accessory device using a unique link key, detects a primary trigger event and responds by transferring automatically its pairing with the accessory device to a second host device while all devices remain within wireless range of each other.

US 2017/289668 A1 discloses an apparatus comprising a main body comprising a connection hole, at least one processor and at least one memory and a wireless earbud configured for plugging into the connection hole of the main body. The wireless earbud has wireless communication capability for wirelessly pairing with a smartphone. In addition to wireless communication capability for wireless pairing with the smartphone, the wireless earbud comprises an earbud connector for connecting with an electric circuit of the main body for wired communication capability with the main body when plugged into the connection hole.

It is an object of the present invention to manage a radio link between a master device and an accessory device.

The object is accomplished by the subject matter of the independent claims. Advantageous developments with convenient and non-trivial further embodiments of the invention are specified in the following description, the dependent claims and the drawings.

The invention provides a method for operating a technical accessory device that is designed to be electrically and/or mechanically connected to a master device over a predefined physical link. As has already been explained, as a specific example, the master device may be, e.g., a motor vehicle, and the accessory device may be, e.g., a trailer for the motor vehicle. For additionally exchanging data or transmitting data or digital signals between the master device and the accessory device, not only an electric and/or mechanic connection may be needed, but also a communication link. This may be implemented as a wireless data connection on the basis of a radio link. According to the method, a control unit of the accessory device sends out a first device identifier of the accessory device over a radio interface for establishing a radio link to the master device. The first device identifier uniquely identifies the accessory device, e.g. a unique device name and/or device number (e.g. a serial number). For example, the radio interface may be a Bluetooth interface and as such the first device identifier may be a Bluetooth identifier of the accessory device. The control unit of the accessory device sends out said first device identifier when the control unit is switched on. In other words, the control unit changes its state from switched-off or stand-by to the state switched-on. The control unit may keep sending the first device identifier over the radio interface while no radio link is established.

If the master device and the accessory device have been mutually registered or paired, the master device may react by establishing the radio link on the basis of the described paring data (e.g. registration data and/or encryption key) from a previously performed pairing routine.

As has already been described, the problem may know arise, if a user disconnects the accessory device from the master device, i.e. interrupts or disconnects the physical link, and connects the accessory device to another, new master device by establishing a new physical link between the accessory device and the new master device. The former master device that has already been paired with the accessory device, may not register or detect this and may still react to the first device identifier received over the radio interface by establishing the radio link to the accessory device, although no physical link is existent anymore between this former master device and the accessory device.

To prevent this, the control unit of the accessory device observes a connection status of the physical link and, if a disconnection of the physical link is detected, the next time the control unit is switched on (such that a device identifier needs to be sent out or broadcast over the radio interface), the control unit of the accessory device changes the first device identifier into a second device identifier according to a predefined changing pattern. In other words, the control unit may send out a different device identifier or device name. The control unit sends out the second device identifier instead of the first identifier. The control unit sends out the second device identifier over the radio interface. In other words, before a disconnection of the physical link has been detected, the control unit uses the first device identifier and will broadcast the first identifier over the radio interface. After a disconnection of the physical link has been detected, the control unit will use the second device identifier and will broadcast the second device identifier over the radio interface. Due to the change of the device identifier from the first to the second device identifier, the master device will either not recognize the accessory device (if it does not know the second device identifier) or the use of the second device identifier will signal to the master device that a disconnection of the physical link has occurred or detected, such that the accessory device may no longer be mechanically and/or electrically connected to the master device anymore and therefore no radio link shall be established. There is no need to detect the disconnection immediately when the disconnection occurs. It is sufficient to detect the disconnection later, when the control unit is switched on. At that point in time, a new physical link may have been established already.

By changing to the second device identifier, the accessory device may signal to the master device that the master device shall not establish the radio link to the accessory device anymore. No accidental establishment of a radio link between a master device and a disconnected accessory device will occur.

The invention also comprises embodiments that provide additional technical advantages.

In one embodiment, after the detection of the disconnection and after the second device identifier has been broadcast or has been sent out, a predefined pairing routine is performed for pairing the accessory device with a new master device. In other words, pairing data (e.g. registration data and/or an encryption key) may be exchanged or transferred between the new master device and the accessory device. After the new master device is paired with the accessory device by this pairing routine, the control unit of the accessory device changes or replaces the second device identifier by the first device identifier or a third device identifier and sends it out over the radio interface. Instead of the second device identifier, the control unit therefore uses the first device identifier again or a third, new device identifier. In other words, removing or giving up the second device identifier, the control unit of the accessory device signals to any master device, that no pairing routine shall be performed with this accessory device. The control unit may change between the first device identifier and the second device identifier. Alternatively, a third device identifier may be established, such that a former master device, which may still have kept or stored pairing data from a former pairing routine, may not attempt to establish a radio link to the accessory device. The third device identifier may be set by the new master device.

In one embodiment, the pairing routine is only performed, if additionally the control unit of the accessory device detects an established physical link. In other words, if the accessory device detects that no physical link is present such that the accessory device is not electrically and/or mechanically connected to any master device at all, it will not perform any pairing routine or will not participate in any pairing routine at all. This prevents the accessory device from being accidentally paired with a master device although no electrical and/or mechanical connection, i.e. no physical link, is established between this master device and the accessory device.

The described first device identifier and the second device identifier may each comprise at least one character, wherein a character can be a letter or a number. Especially, the first device identifier is a unique device name of the accessory device. In one embodiment, the said changing pattern for generating the second device identifier comprises that for obtaining the second device identifier, the first device identifier is appended or shortened on the basis of a predefined prefix and/or suffix. In other words the first device identifier and the second device identifier may have at least one character in common. Preferably, the first device identifier is contained in the second device identifier. This provides the advantage that a master device, which receives the second device identifier over the radio interface, may recognize that this received second device identifier belongs to an accessory device, which formerly used the first device identifier. For example, if a master device recognizes the second device identifier of an accessory device to which it has formerly been paired, the master device may de-register the accessory device and/or may delete pairing data for this accessory device, such that the pairing routine has to be performed or triggered again by a user, if the user wants to use that accessory device in connection with this master device again. As an example for possible device identifiers, the first device identifier may comprise of a device name and the second device identifier may be generated by appending a suffix, e.g. the letter "D" to the device name, as a changing pattern.

In one embodiment, as the radio interface, a Bluetooth radio interface is operated. Such a Bluetooth radio interface may comprise the use of at least one specific Bluetooth-related frequency and/or the use of a specific Bluetooth protocol. Using the Bluetooth radio interface provides the advantage that the change of a device identifier in an accessory device can be performed by means of well-established functionalities.

In one embodiment, the physical link which may be established between the accessory device and a master device, may comprise a mechanical link and/or an electrical link. A mechanical link may be based on, e.g. a connection mechanism and/or a chain and/or a cradle and/or a pole and/or a towing bar - just to name examples. The electrical link may be based on, e.g., a wire and/or a cable and/or an electrically conductive element for a galvanic connection - just to name examples. The disconnection of the physical link may be detected on the basis of a sensor, which may, e.g., detect the disconnection of the mechanical link. The disconnection of an electrical link may be detected by means of the presence or absence of an electric voltage and/or of an electric current and/or by a value of an electrical resistance and/or capacitance and/or inductivity between at least two measuring contacts.

However, in a preferred embodiment, the physical link comprises the electrical link and the control unit is supplied with electric energy over the electrical link. In other words, if the physical link is disconnected, the electrical link is correspondingly also disconnected such that the control unit of the accessory device is unsupplied or disconnected from the electric energy (e.g. an electric supply voltage). The disconnection of the electrical link is then detected by the control unit on the basis of a reset status of the control unit, the first time that the control unit is switched on again after the disconnection has occurred. In other words, if the control unit is only switched off while the electrical link is still established, after switching on the control unit, the control unit may still have stored predefined status data in a data storage (e.g. because the data storage keeps data only while it is continuously supplied with an electrical voltage). For example, switching off the control unit may put the control unit into a stand-by mode. If, instead, the electrical link to the master device has been disconnected temporarily, this means that the control unit will be cut off from the electric energy supply. The data storage not be able to recover status data from the data storage, as they will be erased. This may be interpreted as a reset status. Another possibility to detect a reset status can be the use of a boot-up routine that may be started after-reconnection, after the control unit has been disconnected from the energy supply or the electric voltage of the electrical link. Using the electrical link for providing or supplying electric energy to the control unit of the accessory device provides the advantage that a radio link can only be established to the control unit, if the accessory device is actually electrically connected to a master device. An electrical link to a disconnected accessory device is impossible due to lack of an electric energy supply. As an example, if the accessory device is a trailer, the electrical link may be a cable for electrically connecting the trailer to a master device in the form of a motor vehicle, e.g. a truck or a truck cabin.

Accordingly, in one embodiment, as the accessory device a trailer for a motor vehicle is operated and as the physical link to the master device at least one electric connection to the motor vehicle is established. The physical link may be or comprise the described electrical link. Preferably, the electrical link supplies the control unit with electric energy for operating the control unit.

In one embodiment, the control unit maintains only one established radio link at a time and ignores any attempt of any other master device to establish a further radio link while the established radio link is in operation. In other words, after the accessory device has been connected to a new master device and the pairing routine has been successfully performed by the new master device and the accessory device, such that the accessory device changes from the second device identifier to the first device identifier, the former or old master device may still not be able to also establish a radio link to the accessory device, although it may receive the first device identifier over the radio link. As the accessory device is then linked to the new master device over an already established radio link, the former or old master device may not establish a second or additional radio link.

By the accessory device and a corresponding master device, a system may be provided which is also part of the invention. This system is for managing a radio link between the master device and the accessory device, wherein the accessory device is designed to be electrically and/or mechanically connected to the master device over a predefined physical link as has already been described and the control unit of the accessory device is designed to perform an embodiment of the inventive method. The control unit may be based on at least one microcontroller and/or on at least one microprocessor. The control unit may comprise a data storage in which a program code may be stored. The program code may be designed to perform the embodiment of the inventive method if executed by the control unit.

As has already been emphasized, the master device may be a motor vehicle or it may be integrated into a motor vehicle and the accessory device may be a trailer for the motor vehicle or may be integrated into such a trailer for the motor vehicle. The master device integrated into the motor vehicle may be designed as an electronic control unit for the motor vehicle. The accessory device integrated into a trailer may also be designed as an electronic control unit.

The invention also comprises the components of the inventive system that is an accessory device and a master device.

The accessory device for the system is designed to be electrically and/or mechanically connected to a master device of the system over a predefined physical link and a control unit of the accessory device is designed to perform an embodiment of the inventive method as has already been described.

The master device for the system comprises a control unit which is named here as master control unit in order to distinguish this master control unit from the control unit of the accessory device. The master control unit is designed to receive a device identifier of an accessory device of the system over a radio interface, e.g. the Bluetooth radio interface as already mentioned. The master control unit is designed to receive the device identifier during a system start-up, when both the master device and the accessory device are switched on, i.e. change from switch-off mode or stand-by-mode to switch-on mode. The master control unit is additionally designed to categorize the received device identifier as one of a first device identifier and a second device identifier of the accessory device. The first device identifier comprises at least one character (as already has been described) and the second device identifier corresponds to the first device identifier that is changed according to a predefined changing pattern. In other words, the master control unit may recognize, if the received device identifier is a first device identifier or a second device identifier. For example, the second device identifier may comprise a predefined prefix and/or suffix as compared to a first device identifier. For example, a second device identifier may end with the letter "D", which may be forbidden for any first device identifier. The master control unit is additionally designed to activate a user interface for receiving user input for triggering a pairing routine, if the second device identifier is detected. In other words, if the master control unit recognizes or detects, that the accessory device sends out a second device identifier, a user is given the possibility to provide user input which may trigger or start a pairing routine for pairing the master device with the accessory device that has been identified as using a second device identifier. On the user interface, the user may be presented the received device identifier for selecting in order to trigger the pairing routine. The user interface may be designed as, e.g., a touch-screen provided or controlled by the master device.

In one embodiment, the master device comprises a master control unit that is designed to perform the triggered pairing routine together with the accessory device and, if the pairing routine has been performed, such that e.g. pairing data are available in the master control unit, and if at a further system start-up a then received device identifier us categorized as the first device identifier of the accessory device, to establish a radio link to the accessory device independently of any further user input. In other words, once the pairing routine has been performed successfully, at the next start-up the master control unit will automatically (with no further user input) establish the radio link to the accessory device. The master control unit may recognize that it may establish the radio link as the first device identifier is received.

The master device may be designed such that the master control unit deletes the pairing data and/or deregisters the accessory device, if after the pairing routine have been performed and if at a further system start-up the received device identifier is categorized as the second device identifier. In other words, once the accessory device signals by means of its second device identifier that it has detected a disconnection of the physical link, the master device will no longer attempt to establish the radio link to this accessory device anymore. Instead, it will wait for further user input for triggering the pairing routine again.

The invention also comprises the combinations of the features of the described embodiments.

In the following an exemplary implementation of the invention is described. The figures show:
- Fig. 1: a schematic illustration of a system according to the invention performing an embodiment of the inventive method;
- Fig. 2: a schematic illustration of a first and a second device identifier;
- Fig. 3: a schematic illustration of another embodiment of the inventive system in a first connection state;
- Fig. 4: a schematic illustration of the system according to Fig. 3 in a second connection state.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

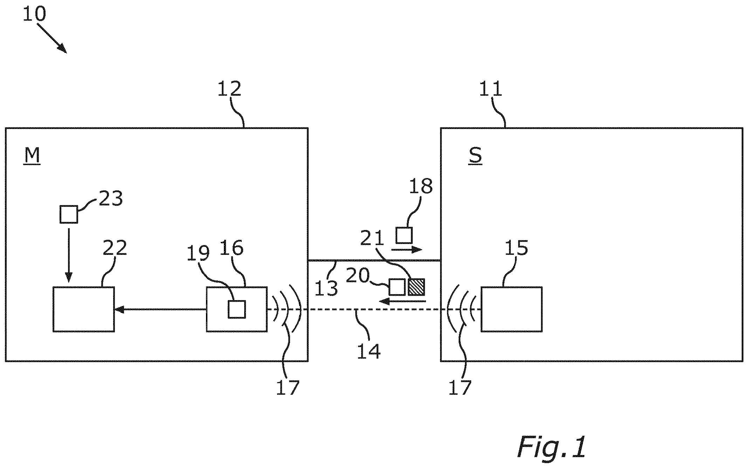

Fig. 1 shows a system 10 that may comprise an accessory device 11 and a master device 12. The accessory device 11 may also be regarded as a subsystem S (slave subsystem) of system 10, wherein master device 12 may be regarded as a subsystem M (master subsystem) of the system 10.

The accessory device 11 may be designed to be connected to the master device by means of a physical link 13 which may comprise an electrical link and/or a mechanical link. Additionally to the physical link 13, a radio connection or radio link 14 may be needed in order to transfer or exchange data between a control unit 15 of the accessory device 11 and a master control unit 16 of the master device 12. The radio link 14 is a communication link between the control unit 15 and the master control unit 16. No communication or data transfer may be possible of the physical link 13.

For example, accessory device 11 may be a trailer and master device 12 may be a motor vehicle in the form of a cabin or a towing vehicle or traction engine. The physical link 13 may comprise a cable for electrically connecting the accessory device 11 to the master device 12 such that electric energy 18 for supplying the control unit 15 with electric energy for operating the control unit 15 may be transferred. The radio link 14 may be based on a radio interface 17 which can be, for example, a Bluetooth radio interface. The data transferred over the radio link 14 may be, e.g., weight data that may be determined by at least one weight sensor of the trailer.

When the physical link 13 is established, the system 10 may be switched on and off. By switching off the system 10, both the master control unit 16 and the control unit 15 may be switched into a stand-by mode or switched-off mode. The accessory device 11 may still be supplied by a supply voltage, such that nor reset occurs when switching off the control unit 15. When system 10 is switched on, a system start-up is performed by switching on both master control unit 16 and control unit 15. As the radio link 14 may be interrupted or turned off during the switched-off state of system 10, it must be established. Switching on the system 10 and therefore switching on the control unit 15 of accessory device 11, may be controlled by the turning-on of an ignition of the master device 12. In other words the system-startup of system 10 may be triggered by the ignition of the master device 12.

The establishment of the radio link 14 may require that the pairing routine has been successfully performed by the control unit 15 and the master control unit 16. By means of the pairing routine, pairing data 19 may be available in the master control unit 16 and/or the accessory device 11 for establishing the radio link 14 with the control unit 15 automatically, i.e. without the need of any further user input.

However, if accessory device 11 is disconnected from master device 12, that is the physical link 13 is disconnected, the master control unit 16 should not be able to establish the radio link 14 anymore, even if the pairing data 19 is still available. The reason is that accessory device 11 may be linked to another master device (not shown) such that this new master device may want or need to establish its own radio link to the control unit 15 of accessory device 11 to which a new physical link is then established.

To this end, control unit 15 may observe a state of the physical link 13. For example, control unit 15 may verify when switched on if in the meantime physical link 13 has been disconnected. For example, control unit 15 may detect that the energy supply of electric energy 18 has been interrupted. For example a reset status of control unit 15 may signal such a temporary disconnection.

For enabling a radio link 14, control unit 15 may send out a device identifier 20 over the radio interface 17 such that master control unit 16 my receive the device identifier 20 indicating the presence and/or readiness of control unit 15 for establishing radio link 14. Master control unit 16 may then use the pairing data 19 for establishing the radio link 14 to control unit 15. This device identifier 20 is called first device identifier in the sequel. If control unit 15 has detected that physical link 13 has been disconnected, control unit 15 may use a second device identifier 21 instead of first identifier 20 when control unit 15 is switched on again. In other words, control unit 15 sends out or broadcasts the second device identifier 21 instead of the first device identifier 20 when a disconnection of physical link 13 has occurred and/or been detected and control unit 15 has been switched on. As master control unit 16 receives the second device identifier 21 instead of the first device identifier 20, master control unit 16 may prevent the automatic establishment of radio link 14. Instead, master control unit 16 may signal to a user interface 22, that a user may provide user input 23 which shall authorize or identify or trigger a new pairing routine for pairing master control unit 16 with an accessory device whose device identifier has been received over radio link 14.

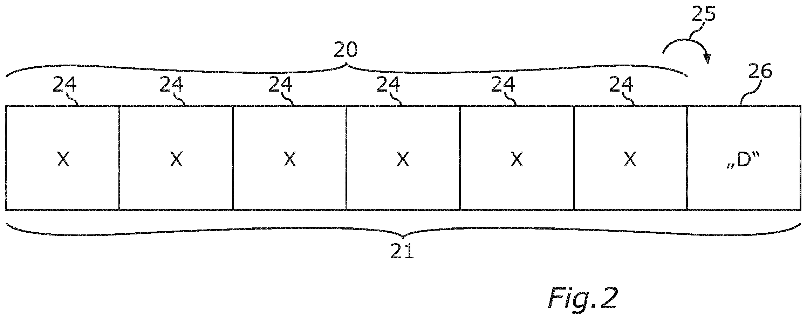

Fig. 2 illustrates, how control unit 15 may derive the second device identifier 21 from the first identifier 20. First identifier 20 may comprise at least one character 24, each of which may be a letter or a number. For turning first device identifier 20 into second device identifier 21, a predefined changing pattern 25 may be applied which may comprise that a suffix 26 is appended to the first device identifier 20, e.g. an additional letter D. This enables master control unit 16 to rerecognize the first device identifier 20 in the second device identifier 21. Master control unit 16 therefore detects that in accessory device 11 a disconnection of the physical link 13 has been detected.

Thus, when subsystem S is first physically connected with subsystem M, powered and working, the BT (Bluetooth) pairing/connection shall be triggered by the human user via an HMI (Human Machine Interface). But, from then on, each time the system goes from stand by to working state, it is requested the BT pairing/connection to be done automatically without human intervention as long as S and M were not phisically disconnected.

Since there might be more such systems in a specific area, at switch ON, each subsystem M might detect more subsystems S, but it must 'know' to automatically BT connect to subsystem S with which it has a physical connection with power supply lines.
1. One subsystem M can be physically connected to only one subsystem S at a time.
2. A subsystem M can be physically connected to any subsystem S (if more of the same type exist).
3. A subsystem M can detect via Bluetooth more S subsystems even if itself is not physically connected to any S subsystem.

The solution makes use of 2 capabilities:
1. The possibility to manipulate the Bluetooth device name of subsystem S.
2. The S acknowledgement from unpowered to powered state transition.

When a subsystem S is not physically connected to a subsystem M, it is unpowered. When a system is assembled by physically connecting a subsystem S with a subsystem M, the subsystem S will mark the transition from unpowered state to powered state - in other words from physically disconnected to physically connected in a system - by inserting a distinctive sign in its Bluetooth name (e.g inserting D letter at the end of the name 'xxx..xxxD' - here 'D' stands from 'Disconnected') which signalize the fact the subsystem S was previously physically disconnected from a system and it is no longer sure S and M belong to same system any longer (M can Bluetooth detect S even if S is physically connected with another M). Therefore, a new physical connection (a new system) was created and the first Bluetooth connection/pairing shall be triggered via HMI by the human factor which is aware S and M belong to the same system; from this point S drops the distinctive sign 'D' from its Bluetooth name, M 'remembers' S as his last connection, and from now on, as long as after switching ON M finds S without having the 'D' inside its name, the automatic Bluetooth connection/pairing is triggered since there is a certainty that S and M are still parts of the same system.

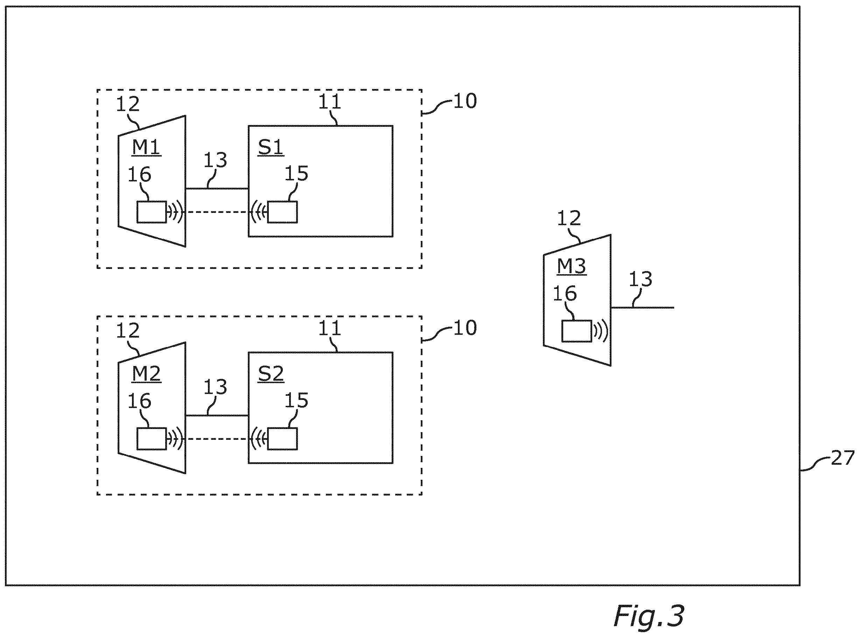

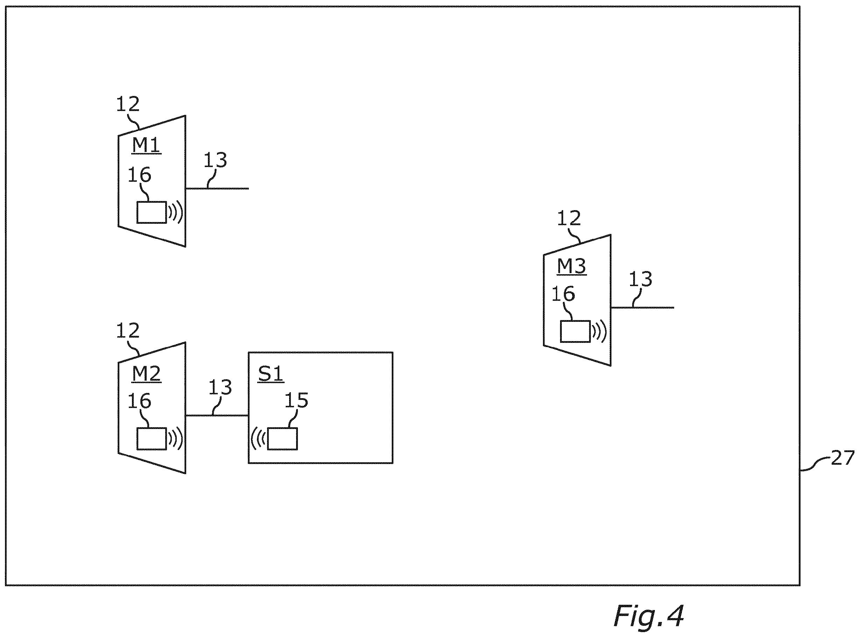

Fig. 3 and Fig. 4 illustrate a further, more detailed example. Fig. 3 illustrates two systems 10 each comprising an accessory device 11 and a master device 12 wherein the accessory device 11 may comprise a control unit 15 and the master device 12 may comprise a master control unit 16. The accessory devices 11 are distinguished by means of labels as 1, as 2, wherein the master devices are distinguished by means of labels M1, M2, M3.

The accessory devices S1, S2 and the master devices M1, M2, M3 are arranged within an area 27 that is of a size such that any radio signals, especially any device identifiers sent out within area 27 by any of the control unit 15 may be received by any or each master control unit 16 of all the master devices M1, M2, M3 in the area 27. For example, master devices M1, M2, M3 may be motor vehicles and accessory devices as 1, S2 may be trailers. The area 27 may be the parking lot. Again, the accessory devises S1, S2 may be regarded as subsystems of the respective system 10 and the master devices M1, M2, M3 may also be regarded as subsystems of the respective system 10, wherein the system comprising the master device M3 is not complete, as an accessory device is missing.

As initial state, subsystems S1, S2, M1, M2 are standalone, not connected as systems.
*Step1* : S1 is physically connected with M1 forming the system S1M1.
*Step2 :* S1M1 is powered and switched ON.
*Step3 :* S1 detects the transition from unpowered->powered and adds the distinctive 'D' in its Bluetooth name.
*Step4* : The user choses Bluetooth connection/pairing between S1 and M1.
*Step5* : S1 drops the 'D' from its Bluetooth name.
*Step6* : Apply steps 1..5 for S2M2.
*Step 7* : From now on, at each switch OFF->ON, the Bluetooth connection/pairing between S1 and M1, respectively S2 and M2 is done automatically without human intervention even if M1 and M2 can detect both S1 and S2.
*Step8* : The user disconnects S1 and S2 from M1 and M2 and physically connects M2 with S1; M1 and S2 are not connected in any system; M2S1 and M1 are powered and switched ON. Both M1 and M2 can and will detect S1.
*Step 9* : M2 does not detect S2 (last connection) and waits for the user to trigger the Bluetooth connection with S1.
*Step 10* : M1 can detect S1(last connection) in 2 different moments :
   a) Before S1 is Bluetooth connected with M2. In this case S1 has distinctive 'D', therefore M1 will not automatically connect to S1 anymore and waits for user to trigger a new connection.
   b) After S1 is Bluetooth connected with M2. In this case S1 does not have the distinctive 'D', therefore M1 will try to connect with S1(as last connection) but will fail since S1 is already connected with M2 and only one connection at a time is accepted by S1.

Overall, the example shows how an automatic Bluetooth connection with application to the cabin and the trailer of a truck is provided by the invention.

### Reference signs

- 10: system
- 11: accessory device
- 12: master device
- 13: physical link
- 14: radio link
- 15: control unit
- 16: master control unit
- 17: radio interface
- 18: electric energy
- 19: pairing data
- 20: first device identifier
- 21: second device identifier
- 22: user interface
- 23: user input
- 24: character
- 25: changing pattern
- 26: suffix
- 27: area
- M, M1, M2, M3: master device
- S, S1, S2: accessory device

## Claims

1. Method for operating an accessory device (11) that is designed to be electrically and/or mechanically connected to a master device (12) over a predefined physical link (13), wherein a control unit (15) of the accessory device (11) sends out a first device identifier (20) of the accessory device (11) over a predefined radio interface (17) for establishing a radio link (14) to the master device (12), when the control unit is switched on, **characterized in that** the control unit (15) observes a connection status of the physical link (13) and, if a disconnection of the physical link (13) is detected, the next time the control unit (15) is switched on, the control unit (15) changes the first device identifier (20) into a second device identifier (21) according to a predefined changing pattern (25) and sends out the second device identifier (21) over the radio interface (17).

2. Method according to claim 1, wherein after the detection of the disconnection and after the second device identifier (21) is sent out, a predefined pairing routine is performed for pairing the accessory device (12) with a new master device and after the new master device is paired with the accessory device (11) the control unit (15) sends out the first device identifier (20) or a third device identifier instead of the second device identifier (21).

3. Method according to claim 2, wherein the pairing routine is only performed, if additionally the control unit (15) detects an established physical link (13).

4. Method according to any of the preceding claims, wherein the changing pattern (25) comprises that for obtaining the second device identifier (21) the first device identifier (20) is appended or shortened on the basis of a predefined prefix and/or suffix (26).

5. Method according to any of the preceding claims, wherein as the radio interface a Bluetooth radio interface is operated.

6. Method according to any of the preceding claims, wherein as the physical link (13) a mechanical link and/or an electrical link is established.

7. Method according to claim 6, wherein the physical link (13) comprises the electrical link and the control unit (15) is supplied with electric energy (18) over the electrical link and the disconnection of the electrical link is detected by the control unit (15) on the basis of a reset status of the control unit (15).

8. Method according to any of the preceding claims, wherein as the accessory device (11) a trailer for a motor vehicle is operated and as the physical link (13) to the master device (12) at least an electric connection to the motor vehicle is established.

9. Method according to any of the preceding claims, wherein the control unit (15) maintains only one established radio link (14) at a time and ignores any attempt of any other master device to establish a further radio link while the established radio link (14) is in operation.

10. System (10) for managing a radio link (14) between a master device (12) according to claim 13 and an accessory device (11) according to claim 12, wherein the system (10) comprises the master device (12) and the accessory device (11) and wherein the accessory device (11) is designed to be electrically and/or mechanically connected to the master device (12) over a predefined physical link (13) and a control unit (15) of the accessory device (11) is designed to perform a method according to any of the preceding claims.

11. System (10) according to claim 10, wherein the master device (12) is a motor vehicle or is integrated into a motor vehicle and the accessory device (11) is a trailer for the motor vehicle or is integrated into a trailer for the motor vehicle.

12. Accessory device (11) for a system (10) according to claim 10 or 11, wherein the accessory device (11) is designed to be electrically and/or mechanically connected to a master device (12) of the system (10) over a predefined physical link (13) and a control unit (16) of the accessory device (11) is designed to perform a method according to any of claims 1 to 9.

13. Master device (12) for a system (10) according to claim 10 or 11, wherein the master device (12) comprises a master control unit (16) that is designed to receive a device identifier (20, 21) of an accessory device (11) of the system (10) over a radio interface (17) during a system start-up and to categorize the received device identifier (20) as one of a first device identifier (20) and a second device (20) identifier of the accessory device (11), wherein the first device identifier (20) comprises at least one character (24) and the second device identifier (21) corresponds to the first device identifier (20) that is changed according to a predefined changing pattern (25), and to activate a user interface (22) for receiving user input (23) for triggering a pairing routine, if the second device identifier (21) is detected.

14. Master device (12) according to claim 13, wherein the master control unit (16) is designed to perform the triggered pairing routine together with the accessory device (11) and, if the pairing routine has been performed and if at a further system start-up a then received device identifier (20) is categorized as the first device identifier of the accessory device (11), to establish a radio link (14) to the accessory device (11) independently of any further user input.

## Patentansprüche

1. Verfahren zum Betreiben einer Zubehörvorrichtung (11), die entworfen ist, um mit einer Hauptvorrichtung (12) über eine im Voraus definierte physikalische Verbindung (13) elektrisch und/oder mechanisch verbunden zu sein, wobei eine Steuereinheit (15) der Zubehörvorrichtung (11) eine erste Vorrichtungskennung (20) der Zubehörvorrichtung (11) über eine im Voraus definierte Funkschnittstelle (17) zum Einrichten einer Funkverbindung (14) an die Hauptvorrichtung (12) aussendet, wenn die Steuereinheit eingeschaltet wird, **dadurch gekennzeichnet, dass** die Steuereinheit (15) einen Verbindungzustand der physikalischen Verbindung (13) beobachtet und die Steuereinheit (15) dann, wenn eine Unterbrechung der physikalischen Verbindung (13) detektiert wird, das nächste Mal, wenn die Steuereinheit (15) eingeschaltet wird, die erste Vorrichtungskennung (20) in eine zweite Vorrichtungskennung (21) gemäß einem im Voraus definierten Änderungsmuster (25) ändert und die zweite Vorrichtungskennung (21) über die Funkschnittstelle (17) aussendet.

2. Verfahren nach Anspruch 1, wobei nach der Detektion der Unterbrechung und nachdem die zweite Vorrichtungskennung (21) ausgesendet wurde, eine im Voraus definierte Paarungsroutine zum Paaren der Zubehörvorrichtung (12) mit einer neuen Hauptvorrichtung ausgeführt wird, und nachdem die neue Hauptvorrichtung mit der Zubehörvorrichtung (11) gepaart wurde, die Steuereinheit (15) die erste Vorrichtungskennung (20) oder eine dritte Vorrichtungskennung anstelle der zweiten Vorrichtungskennung (21) aussendet.

3. Verfahren nach Anspruch 2, wobei die Paarungsroutine nur ausgeführt wird, wenn zusätzlich die Steuereinheit (15) eine eingerichtete physikalische Verbindung (13) detektiert.

4. Verfahren nach einem der vorhergehenden Ansprüche, wobei das Änderungsmuster (25) umfasst, dass zum Erhalten der zweiten Vorrichtungskennung (21) die erste Vorrichtungskennung (20) anhand eines im Voraus definierten Präfixes und/oder Suffixes (26) angehängt oder gekürzt wird.

5. Verfahren nach einem der vorhergehenden Ansprüche, wobei als die Funkschnittstelle eine Bluetooth-Funkschnittstelle betrieben wird.

6. Verfahren nach einem der vorhergehenden Ansprüche, wobei als die physikalische Verbindung (13) eine mechanische Verbindung und/oder eine elektrische Verbindung eingerichtet wird.

7. Verfahren nach Anspruch 6, wobei die physikalische Verbindung (13) die elektrische Verbindung umfasst und die Steuereinheit (15) mit elektrischer Energie (18) über die elektrische Verbindung versorgt wird und die Unterbrechung der elektrischen Verbindung durch die Steuereinheit (15) anhand eines Rückstellzustands der Steuereinheit (15) detektiert wird.

8. Verfahren nach einem der vorhergehenden Ansprüche, wobei als die Zubehörvorrichtung (11) ein Anhänger für ein Motorfahrzeug betrieben wird und als die physikalische Verbindung (13) zu der Hauptvorrichtung (12) mindestens eine elektrische Verbindung mit dem Motorfahrzeug eingerichtet wird.

9. Verfahren nach einem der vorhergehenden Ansprüche, wobei die Steuereinheit (15) jeweils nur eine eingerichtete Funkverbindung (14) beibehält und jeden Versuch einer anderen Hauptvorrichtung, eine weitere Funkverbindung einzurichten, während die eingerichtete Funkverbindung (14) in Betrieb ist, ignoriert.

10. System (10) zum Managen einer Funkverbindung (14) zwischen einer Hauptvorrichtung (12) nach Anspruch 13 und einer Zubehörvorrichtung (11) nach Anspruch 12, wobei das System (10) die Hauptvorrichtung (12) und die Zubehörvorrichtung (11) umfasst und wobei die Zubehörvorrichtung (11) entworfen ist, mit der Hauptvorrichtung (12) über eine im Voraus definierte physikalische Verbindung (13) elektrisch und/oder mechanisch verbunden zu sein, und eine Steuervorrichtung (15) der Zubehörvorrichtung (11) entworfen ist, ein Verfahren nach einem der vorhergehenden Ansprüche auszuführen.

11. System (10) nach Anspruch 10, wobei die Hauptvorrichtung (12) ein Motorfahrzeug ist oder in ein Motorfahrzeug eingebaut ist und die Zubehörvorrichtung (11) ein Anhänger für das Motorfahrzeug ist oder in einen Anhänger für das Motorfahrzeug eingebaut ist.

12. Zubehörvorrichtung (11) für ein System (10) nach Anspruch 10 oder 11, wobei die Zubehörvorrichtung (11) entworfen ist, mit einer Hauptvorrichtung (12) des Systems (10) über eine im Voraus definierte physikalische Verbindung (13) elektrisch und/oder mechanisch verbunden zu sein, und eine Steuereinheit (16) der Zubehörvorrichtung (11) entworfen ist, ein Verfahren nach einem der Ansprüche 1 bis 9 auszuführen.

13. Hauptvorrichtung (12) für ein System (10) nach Anspruch 10 oder 11, wobei die Hauptvorrichtung (12) eine Hauptsteuereinheit (16) umfasst, die entworfen ist, eine Vorrichtungskennung (20, 21) einer Zubehörvorrichtung (11) des Systems (10) über eine Funkschnittstelle (17) während eines Systemstarts zu empfangen und die empfangene Vorrichtungskennung (20) als eine einer ersten Vorrichtungskennung (20) und einer zweiten Vorrichtungskennung (20) der Zubehörvorrichtung (11) zu kategorisieren, wobei die erste Vorrichtungskennung (20) mindestens ein Zeichen (24) umfasst und die zweite Vorrichtungskennung (21) der ersten Vorrichtungskennung (20) entspricht, die gemäß einem im Voraus definierten Änderungsmuster (25) geändert wird, und eine Anwenderschnittstelle (22) zu aktivieren, um eine Anwendereingabe (23) zum Auslösen einer Paarungsroutine zu empfangen, wenn die zweite Vorrichtungskennung (21) detektiert wird.

14. Hauptvorrichtung (12) nach Anspruch 13, wobei die Hauptsteuereinheit (16) entworfen ist, die ausgelöste Paarungsroutine zusammen mit der Zubehörvorrichtung (11) auszuführen und dann, wenn die Paarungsroutine ausgeführt wurde und wenn bei einem weiteren Systemstart eine dann empfangene Vorrichtungskennung (20) als die erste Vorrichtungskennung der Zubehörvorrichtung (11) kategorisiert wird, eine Funkverbindung (14) mit der Zubehörvorrichtung (11) unabhängig von einer weiteren Anwendereingabe einzurichten.

## Revendications

1. Procédé d'exploitation d'un dispositif accessoire (11) qui est conçu pour être connecté électriquement et/ou mécaniquement à un dispositif maître (12) par le biais d'une liaison physique prédéfinie (13), une unité de commande (15) du dispositif accessoire (11) envoyant un premier identifiant de dispositif (20) du dispositif accessoire (11) par le biais d'une interface radio prédéfinie (17) pour établir une liaison radio (14) avec le dispositif maître (12), lorsque l'unité de commande est mise sous tension, **caractérisé en ce que** l'unité de commande (15) observe un état de connexion de la liaison physique (13) et, en cas de détection d'une déconnexion de la liaison physique (13), lors de la prochaine mise sous tension de l'unité de commande (15), l'unité de commande (15) modifie le premier identifiant de dispositif (20) pour un deuxième identifiant de dispositif (21) selon un schéma de modification prédéfini (25) et envoie le deuxième identifiant de dispositif (21) par le biais de l'interface radio (17).

2. Procédé selon la revendication 1, dans lequel, suite à la détection de la déconnexion et suite à l'envoi du deuxième identifiant de dispositif (21), une routine d'appairage prédéfinie est réalisée pour appairer le dispositif accessoire (12) avec un nouveau dispositif maître et, suite à l'appairage du nouveau dispositif maître avec le dispositif accessoire (11), l'unité de commande (15) envoie le premier identifiant de dispositif (20) ou un troisième identifiant de dispositif au lieu du deuxième identifiant de dispositif (21).

3. Procédé selon la revendication 2, dans lequel la routine d'appairage n'est réalisée que si, de plus, l'unité de commande (15) détecte une liaison physique établie (13).

4. Procédé selon l'une quelconque des revendications précédentes, dans lequel le schéma de modification (25) comprend, pour l'obtention du deuxième identifiant de dispositif (21), l'adjonction ou le raccourcissement du premier identifiant de dispositif (20) sur la base d'un préfixe et/ou d'un suffixe prédéfinis/prédéfini (26).

5. Procédé selon l'une quelconque des revendications précédentes, dans lequel une interface radio Bluetooth est exploitée comme interface radio.

6. Procédé selon l'une quelconque des revendications précédentes, dans lequel une liaison mécanique et/ou une liaison électrique sont/est établies/établie comme liaison physique (13).

7. Procédé selon la revendication 6, dans lequel la liaison physique (13) comprend la liaison électrique et l'unité de commande (15) est alimentée en énergie électrique (18) par le biais de la liaison électrique et la déconnexion de la liaison électrique est détectée par l'unité de commande (15) sur la base d'un état de réinitialisation de l'unité de commande (15).

8. Procédé selon l'une quelconque des revendications précédentes, dans lequel une remorque pour un véhicule motorisé est exploitée comme dispositif accessoire (11) et au moins une connexion électrique avec le véhicule motorisé est établie comme liaison physique (13) avec le dispositif maître (12).

9. Procédé selon l'une quelconque des revendications précédentes, dans lequel l'unité de commande (15) maintient une seule liaison radio établie (14) à la fois et ignore toute tentative, par tout autre dispositif maître, d'établir une nouvelle liaison radio pendant que la liaison radio établie (14) est en exploitation.

10. Système (10) pour gérer une liaison radio (14) entre un dispositif maître (12) selon la revendication 13 et un dispositif accessoire (11) selon la revendication 12, le système (10) comprenant le dispositif maître (12) et le dispositif accessoire (11) et le dispositif accessoire (11) étant conçu pour être connecté électriquement et/ou mécaniquement au dispositif maître (12) par le biais d'une liaison physique prédéfinie (13), et une unité de commande (15) du dispositif accessoire (11) étant conçue pour réaliser un procédé selon l'une quelconque des revendications précédentes.

11. Système (10) selon la revendication 10, dans lequel le dispositif maître (12) est un véhicule motorisé ou est intégré dans un véhicule motorisé et le dispositif accessoire (11) est une remorque pour le véhicule motorisé ou est intégré dans une remorque pour le véhicule motorisé.

12. Dispositif accessoire (11) pour un système (10) selon la revendication 10 ou 11, le dispositif accessoire (11) étant conçu pour être connecté électriquement et/ou mécaniquement à un dispositif maître (12) du système (10) par le biais d'une liaison physique prédéfinie (13) et une unité de commande (16) du dispositif accessoire (11) étant conçue pour réaliser un procédé selon l'une quelconque des revendications 1 à 9.

13. Dispositif maître (12) pour un système (10) selon la revendication 10 ou 11, le dispositif maître (12) comprenant une unité de commande maîtresse (16) qui est conçue pour recevoir un identifiant de dispositif (20, 21) d'un dispositif accessoire (11) du système (10) par le biais d'une interface radio (17) au cours d'un démarrage du système et pour catégoriser l'identifiant de dispositif (20) reçu soit comme un premier identifiant de dispositif (20) soit comme un deuxième identifiant de dispositif (20) du dispositif accessoire (11), le premier identifiant de dispositif (20) comprenant au moins un caractère (24) et le deuxième identifiant de dispositif (21) correspondant au premier identifiant de dispositif (20) qui est modifié selon un schéma de modification prédéfini (25), et pour activer une interface utilisateur (22) permettant de recevoir une entrée utilisateur (23) permettant de lancer une routine d'appairage en cas de détection du deuxième identifiant de dispositif (21).

14. Dispositif maître (12) selon la revendication 13, dans lequel l'unité de commande maîtresse (16) est conçue pour réaliser la routine d'appairage lancée conjointement avec le dispositif accessoire (11) et, si la routine d'appairage a été réalisée et si, à un nouveau démarrage du système, un identifiant de dispositif (20) alors reçu est catégorisé comme le premier identifiant de dispositif du dispositif accessoire (11), pour établir une liaison radio (14) avec le dispositif accessoire (11) indépendamment de toute nouvelle entrée utilisateur.
